(19) Europäisches Patentamt / European Patent Office / Office européen des brevets

(11) **EP 2 153 737 A1**

(12) **EUROPEAN PATENT APPLICATION**
published in accordance with Art. 153(4) EPC

(43) Date of publication:
**17.02.2010 Bulletin 2010/07**

(51) Int Cl.:
*A23P 1/16* (2006.01)     *A23L 1/00* (2006.01)
*A23L 1/03* (2006.01)

(21) Application number: **08764995.0**

(22) Date of filing: **03.06.2008**

(86) International application number:
**PCT/JP2008/060182**

(87) International publication number:
**WO 2008/149848 (11.12.2008 Gazette 2008/50)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **05.06.2007 JP 2007148817**

(71) Applicant: **Sumitomo Seika Chemicals CO. LTD.**
**Kako-gun**
**Hyogo 675-0145 (JP)**

(72) Inventors:
  • **NAKAI, Hajime**
    **Kako-gun**
    **Hyogo 675-0145 (JP)**

  • **HATA, Hiroyuki**
    **Kako-gun**
    **Hyogo 675-0145 (JP)**
  • **NAGO, Hiroaki**
    **Kako-gun**
    **Hyogo 675-0145 (JP)**

(74) Representative: **Hayes, Adrian Chetwynd et al**
    **Boult Wade Tennant**
    **Verulam Gardens**
    **70 Gray's Inn Road**
    **London WC1X 8BT (GB)**

(54) **METHOD FOR FOAMING FOOD BY USING NITROUS OXIDE AS FOAMING AGENT**

(57)     A container (1) containing a foaming-target food is charged at a predetermined pressure with nitrous oxide and a gas having a smaller solubility in the food than nitrous oxide. Then, the container (1) is shaken sufficiently, and a lever (3c) is operated to let the food come out, whereby the gas in the food begins foaming to give a foamed food product in which fine cells distribute uniformly.

FIG.1

**Description**

TECHNICAL FIELD

The present invention relates to a method for foaming food by using nitrous oxide as a foaming agent, and also relates to a food loading container for use in such a foaming method.

BACKGROUND ART

A method for foaming food by first bringing the food under a high pressure to absorb a gas and then lowering the pressure to release the absorbed gas in the form of cells within the food thereby foaming the food is widely used as a means for changing the appearance and/or texture of the food to thereby provide the food with an added value. Various gases are available for practicing such a method, but carbon dioxide gas is most popularly used as a foaming agent. Carbon dioxide gas has a long history of use in human life, being essential for giving a fluffy texture to bread, very familiar as a foaming ingredient of beer, and as fizzy cells in carbonated beverages. Carbon dioxide gas, however, is not necessarily a preferred foaming gas for foaming creams and other neutral food since it is an acidic gas which gives the food an acidic taste and thereby changes the original taste of the food.

In an attempt to eliminate this drawback, nitrous oxide has been increasingly popular in recent years (see Patent Document 1 below for example). Typical advantages of using this gas includes: that (1) it is a neutral gas and therefore has a low risk of changing the taste of food; and (2) the gas has a high absorption rate into food under a high pressure but it is easily released for foaming of the food under a pressure drop after the gas has been absorbed.

Patent Document 1: JP-A 2006-345776

Problems, however, of using nitrous oxide as a foaming agent include: that (1) it is difficult to produce small-sized cells stably with high reproducibility; (2) since the cells are diverse in size, it is difficult to produce a foamed body having a sufficient shape keeping ability; and (3) when the cells are large in size, the foamed food product retains the advantages of foams only for a short period due to merging of cells in the food.

The foamed food product becomes more opaque to provide better looking when the cell size is smaller. Also, small cells are stable in the food. Therefore, the obtained foamed food product does not loose its shape easily, keeping its shape stably for a long time. Taking whipped cream, for example, if it contains fine cells, the cream is self-sustaining in the shape and stably keeps a white color. If the cells are large, the cream is white but is soft with slight transparency. Also, large cells tend to merge with each other, and the resulting larger cells have an accelerated tendency to merge further and grow in size. This makes it difficult to retain the shape of the foamed body for a long time when the foamed food product contains large cells.

DISCLOSURE OF THE INVENTION

The present invention aims at providing a method for producing small cells in food with a high degree of reproducibility, using nitrous oxide as a foaming agent.

The inventors have found that in making a foamed food product by producing foams in the food with nitrous oxide, a foaming agent containing a combination of nitrous oxide and a less soluble gas having a smaller solubility in the food than nitrous oxide will produce a foamed food product which contains uniformly sized small cells and retains the cells stably. Further, we have also found that this foaming method is applicable to a wide variety of foods.

Thus, according to a first aspect of the present invention, there is provided a method for foaming a food comprising the steps of: charging a container, that contains a foaming-target food, with nitrous oxide and a less soluble gas having a smaller solubility in the food than the nitrous oxide, at a predetermined pressure; allowing the food to partially absorb nitrous oxide and the less soluble gas; and taking the food out of the container while releasing the pressure.

By using the foaming method according to the present invention, it is possible to obtain a foamed food product which contains and stably holds uniformly sized small cells. It is not clear why the combined use of nitrous oxide and a less soluble gas as a foaming agent makes it possible to produce small cells in food with a high reproducibility, but the following discussion may provide a reasonable presumption.

Specifically, the less soluble gas used in combination with nitrous oxide is absorbed by the food together when the food absorbs nitrous oxide under a high pressure. However, when the pressure is lowered to allow the agent gas to produce foams in the food, the less soluble gas takes the gaseous form earlier, producing tiny core cells in the food which help formation of small-sized cells. Presumably, nitrous oxide is subsequently released to gather around each of the originally formed tiny core cells for integrating into a respective single cell. In this way, it is believed that release of the less soluble gas at an early stage provides seed cells for a subsequent foaming stage, and these seed cells exist uniformly and in a greater number than in the case where nitrous oxide is used alone. This mechanism seems to be a primary factor for the formation of uniformly sized cells and for uniform distribution thereof in the food.

Preferably, the less soluble gas is comprises at least one selected from the group consisting of air, nitrogen and oxygen. However, these are enumerated here only for their economic advantages. Where economy is not a consideration, other gases such as helium and argon may be used.

Although there is no specific limitation on the concentration of the less soluble gas relative to a total amount of gas loaded in the container, preferably it is 3 through 30 vol.%, and more preferably, 5 through 20 vol.%.

There is no specific limitation, either, on the predetermined pressure. Preferably, however, it is 0.5 through 2 MPa.

According to a second aspect of the present invention, there is provided a food container loaded with a foaming-target food, nitrous oxide and a less soluble gas having a smaller solubility in the food than the nitrous oxide, wherein the nitrous oxide and the less soluble gas are partially absorbed by the food, the less soluble gas having a concentration of 3 through 30 vol.% relative to a total amount of gas in the container, the predetermined pressure being 0.5 through 2 MPa.

Various features, functions and advantages of the present invention will become clear from the following description of embodiments to be made based on the attached drawings.

BRIEF DESCRIPTION OF THE DRAWINGS

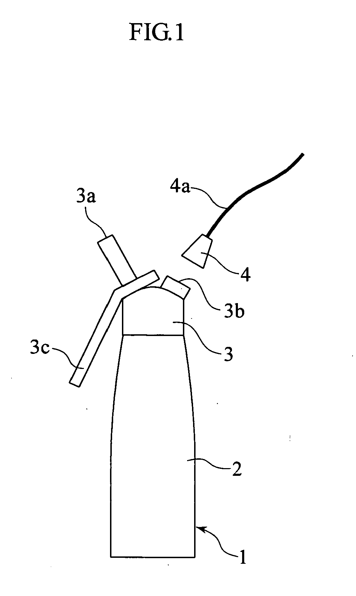

Fig. 1 is a schematic diagram showing a preparing container for use in a foaming method according to the present invention.

BEST MODE FOR CARRYING OUT THE INVENTION

Fig. 1 shows a preparing container for use in implementing a food foaming method according to the present invention. The preparing container indicated by reference number 1 in the figure is used for preparing a foamed food product with use of a foaming gas containing nitrous oxide, and for dispensing the foamed food product under the pressure of the foaming gas. The preparing container 1 includes a main body 2 and a lid 3, and has a volume of 0.5 through 1 dm$^3$ for example. The lid 3, which is detachably mounted to the main body 2, has a nozzle 3a and a gas filling port 3b. The nozzle 3a is provided with a dispensing valve (not illustrated) operable with a lever 3c to open and close. The gas filling port 3b is provided with a check valve (not illustrated), and is connectable with a supply source of the foaming gas via a detachable connector 4 and a pipe 4a.

The preparing container 1 is loaded with a food which is capable of absorbing nitrous oxide and of retaining cells within the food upon release of the absorbed gas. Examples of such food include cream, ice cream, mayonnaise, butter and milk. Examples of the less soluble gas used together with nitrous oxide as a foaming gas include air, nitrogen, oxygen, helium and argon. Among these, air, nitrogen and oxygen are preferred for ease of use. These less soluble gases may be used singularly or in combination.

The preparing container 1 is then loaded with a foaming gas in the following procedure. Specifically, in the case where the foaming gas contains a combination of nitrous oxide and air (less soluble gas), the preparing container 1 already contains air therein. In this case therefore, the gas filling port 3b is connected with a supply source of nitrous oxide (not illustrated) via the connector 4 and the pipe 4a, and then nitrous oxide is charged until the concentration of the air becomes e.g. 3 through 30 vol.% (preferably 5 through 20 vol.%) of the foaming gas contained in the container 1 and the internal pressure increases to e.g. 0.5 through 2 MPa (gage pressure). If there is an excessive amount of air in the container before charging with nitrous oxide, the lever 3c is operated to discharge part of the internal air through the nozzle 3a before charging with nitrous oxide. On the contrary, if there is a shortage of air in the container before charging with nitrous oxide, nitrous oxide is charged first, and the supply source of nitrous oxide is then replaced with a supply source of air to supply a supplementing amount of air via the connector 4 and the pipe 4a.

On the other hand, in the case where the less soluble gas is one other than air (e.g. nitrogen, oxygen, etc.) for combination with nitrous oxide to provide a foaming gas, nitrous oxide is charged through the gas filling port 3b via the connector 4 and the pipe 4a while displacing air from inside the preparing container 1 via the nozzle 3a. Upon lapse of a due time necessary for completing the air discharge, the nozzle 3a is closed and the charging with nitrous oxide is continued. Thereafter, the supply source of nitrous oxide is replaced with a supply source of the less soluble gas, and charging with the less soluble gas is performed through the connector 4 and the pipe 4a until the less soluble gas in the foaming gas inside the container has attained a concentration of e.g. 3 through 30 vol.% (preferably 5 through 20 vol.%) and an internal pressure of e.g. 0.5 through 2 MPa (gage pressure) is attained. Alternatively, a gas mixture of nitrous oxide and the less soluble gas may be prepared in advance, with the less soluble gas preliminarily adjusted to a concentration of e.g. 3 through 30 vol.% (preferably 5 through 20 vol.%), so that the container may be charged with this gas mixture.

Once the preparing container 1 has been charged with the foaming gas as described above, the container is shaken rigorously up and down for about 15 seconds. Then, the lever 3c is operated to open the nozzle 3a for dispensing the content. The food which comes out of the container begins to foam simultaneously with the dispensing operation, thereby providing a foamed food product made of a milky-white foamed body.

According to the present invention, the temperature at which the food is subjected to the foaming gas for absorption, and the temperature at which the absorbed gas is allowed to make foams in the food have a preferred range of -20 through 70°C and more preferably a range of -10 through 50°C, with slight variations depending upon the pressure of the foaming gas to be employed and the ingredients in the food.

The extent of foaming may be expressed by an overrun (volume increase rate by foaming) of the foamed food product, i.e. by the following mathematical expression which compares a pre-foaming volume to a post-foaming volume:

$$\texttt{Overrun (OR\%)} = <(\texttt{post-foaming volume - pre-foaming} \\ \texttt{volume})/\texttt{pre-foaming volume}> \times 100$$

As understood easily, gas absorption at higher pressure followed by lowering the pressure facilitates the foaming operation since a greater amount of gas will take part in production of cells in the food. However, such a condition may give an undesirable result if the rate of foaming is slow, which will allow the cells to grow in size and to increase their volume. On the contrary, gas absorption under lower pressure will result in lack of a large pressure difference when the pressure is released, which means only a small amount of gas is released and therefore it is impossible to achieve a high overrun. In the latter case, the gas is released at a slower speed, which will allow forming a small number of large cells, leading also to an undesirable foamed food product in many cases.

By contrast, the food foaming method according to the present invention allows formation of uniformly sized small cells. Thus, it is possible to produce foamed food products which are stable over time, even under a low charging pressure of not greater than 1 MPa for example, which was traditionally considered difficult to use for foaming. More concretely, a foaming operation with nitrous oxide mixed with a less soluble gas at a concentration of 3 through 30 vol. % results in formation of uniformly sized small cells.

When the pressure of the gas mixture is not greater than 0.5 MPa in the food foaming method according to the present invention, advantages provided by the less soluble gas may be observable to a certain extent, but no remarkable differences will be apparent due to a small overrun. On the other hand, a pressure greater than 2 MPa allows quick foaming, which results in formation of fine cells in general, and so there is no remarkable advantages obtainable from the less soluble gas. In a pressure range of 0.5 through 2 MPa, foaming speed in the food is appropriately slow, allowing the less soluble gas to start foaming before nitrous oxide does. This provides a suitable condition for production of a foamed body containing uniformly small cells which are characteristic of the method according to the present invention.

As for the proportion of the less soluble gas in the nitrous oxide gas mixture, a concentration of not higher than 3 vol.% is not satisfactory for giving rise to an appropriate number of core cells, whereas a concentration exceeding 30 vol.% is not preferred either since it will decrease the amount of nitrous oxide which should be absorbed by the food and play the primary role in the foaming process.

The foaming method according to the present invention permits use of emulsifiers which are employed commonly in order to make cells within a desired size range. Examples of emulsifier include low HLB saturated fatty acids such as fatty acid ester, polyglyceryl fatty acid ester and monoglyceride stearate; low HLB unsaturated fatty acids such as sucrose fatty acid ester, polyglyceryl fatty acid ester, lecithins, monoglyceride oleate; and middle-to-high HLB saturated fatty acids such as sucrose fatty acid ester, polyglyceryl stearic acid ester and sorbitan fatty acid ester. A low-viscosity liquid food is often not suitable for foaming since the food cannot retain the cells produced in the process. In such a case, adding xanthan gum, carrageenan, gelatin, agar, egg white and/or other thickeners to the low-viscosity food is often effective.

Hereinafter, the present invention will be described in further detail, using examples. Note, however, that the present invention is not limited to these examples.

(EXAMPLE 1)

First, 6g of powdery gelatin was added divisionally, each time in a smaller amount, to 294g of warm water heated to a temperature of 60°C under sufficient stirring, to prepare a transparent solution. Then, the aqueous gelatin solution was loaded into a preparing container 1 of the structure shown in Fig. 1 which had a volume of 700ml. The preparing container 1 was cooled from outside in iced water until an internal temperature of 5°C was attained. Then, nitrous oxide was loaded until an internal pressure of 0.9MPa with an air concentration of 10 vol.% was attained in the container 1. Then, the container 1 was shaken up and down rigorously for 15 seconds. Then, the container 1 was turned upside down, and the lever 3c was operated to open the nozzle 3a, allowing the aqueous gelatin solution, which has absorbed the foaming gas (nitrous oxide plus air), to come out of the container. As a result, the aqueous gelatin solution came out of the nozzle 3a, started foaming simultaneously with the dispensing operation from the container, and became a milky white creamy food product. The obtained creamy food product had an overrun of about 250%.

An optical microscopic observation performed to see the state of cells in the obtained creamy food revealed uniform distribution of fine cells of diameters ranging from 50 through 200 $\mu$m. Further, the obtained creamy food was formed into a conical shape the height of which was compared with a height measurement made after lapse of an hour. The comparison revealed excellent shape retainability with a height decrease of about 20%.

(EXAMPLE 2)

A preparing container 1 of the structure shown in Fig. 1 which had a volume of 700ml was loaded with 300ml of fresh cream (Product Name: WHIP, containing vegetable fat at a concentration of 40.0% and manufactured by Nippon Milk Community Co., Ltd). The cream had been cooled at 5°C. Then, nitrous oxide was loaded until an internal pressure of 0.9MPa with an air concentration of 10 vol.% was attained in the container 1. Then, the container 1 was shaken rigorously up and down for 15 seconds. Then, the container 1 was turned upside down, and the lever 3c was operated to open the nozzle 3a, allowing the whip cream, which has absorbed the foaming gas (nitrous oxide plus air), to come out of the container 1. The obtained whip cream product had an overrun of about 350%, which was greater than a value normally obtained from whip cream prepared by a conventional method using a beater. The cream also had a lighter, fluffier shape.

An optical microscopic observation performed to see the state of cells in the obtained whip cream food revealed uniform distribution of fine cells of diameters range from about 50 through 200$\mu$m. Further, the obtained whip cream was formed into a conical shape the height of which was compared with a height measurement made after lapse of an hour. The comparison revealed excellent shape retainability with a height decrease of about 20%.

(EXAMPLE 3)

A preparing container 1 of the structure shown in Fig. 1 which had a volume of 700ml was loaded with 200ml of fresh cream (Product Name: FRESH, containing milk fat at a concentration of 45.0% and manufactured by Nippon Milk Community Co., Ltd) and 100ml of milk (containing milk fat at a concentration of 5%). Both had been cooled at 5°C. The mixture was stirred lightly, and then, nitrous oxide was loaded until an internal pressure of 0.8MPa with an air concentration of 5 vol.% was attained in the container 1. Next, the container 1 was shaken rigorously up and down for 15 seconds. Then, the container 1 was turned upside down, and the lever 3c was operated to open the nozzle 3a, allowing the whip cream, which has absorbed the foaming gas (nitrous oxide plus air), to come out of the container 1. The obtained whip cream product had an overrun of about 320%, which was greater than a value normally obtained from whip cream prepared by a conventional method using a beater. The cream also had a lighter, fluffier shape.

An optical microscopic observation performed to see the state of cells in the obtained whip cream revealed uniform distribution of fine cells of diameters ranging from 50 through 200$\mu$m. Further, the obtained whip cream was formed into a conical shape the height of which was compared with a height measurement made after lapse of an hour. The comparison revealed excellent shape retainability with a height decrease of about 10%.

(EXAMPLE 4)

200g of bananas cooled to 10°C and 100g of fresh cream (containing milk fat at a concentration of 45%) also cooled to 10°C were beaten sufficiently in a mixer for fluidizing, and then loaded into a preparing container 1 of the structure shown in Fig. 1 which had a volume of 700ml. Then, nitrous oxide was loaded until an internal pressure of 0.9 MPa with an air concentration of 10 vol. % was attained in the container 1. Then, the container 1 was shaken rigorously up and down for 15 seconds. Then, the container 1 was turned upside down, and the lever 3c was operated to open the nozzle 3a, allowing the creamy food product, which had absorbed the foaming gas (nitrous oxide plus air), to come out of the container 1. The obtained creamy food product had a mousse like appearance with a smooth texture and an overrun of about 270%.

An optical microscopic observation performed to see the state of cells in the obtained creamy food product revealed uniform distribution of fine cells of diameters ranging from 50 through 200$\mu$m in the foamed body.

(Example 5)

5g of powdery gelatin was added to 200ml of grapefruit juice (100% natural juice) heated to a temperature of 60°C. The mixture was stirred sufficiently for 10 minutes until it became a homogeneous solution. Then, the solution was loaded into a preparing container 1 of the structure shown in Fig. 1 which had a volume of 700ml. The preparing container 1 was cooled from outside in iced water until an internal temperature of 5°C was attained. Then, a foaming gas containing a gas mixture of nitrous oxide and nitrogen was loaded until an internal pressure of 0.9MPa with a nitrogen concentration of 5 vol.% was attained in the container 1. Then, the container 1 was shaken rigorously up and down for 15 seconds. The container 1 was then turned upside down above a half-glassful of grapefruit juice (100% natural juice) cooled to a temperature of 10°C, and the lever 3c was operated to open the nozzle 3a, allowing the creamy food product, which had absorbed the foaming gas (nitrous oxide plus nitrogen), to come out onto the top of the juice. As a result, a new beverage was obtained which is novel both in appearance and in texture, having a two-layer structure with the lower layer provided by grapefruit juice and the upper layer provided by the topping of smooth and uniform foam of grapefruit cram. The obtained creamy food product had an overrun of about 150%.

An optical microscopic observation performed to see the state of cells in the obtained creamy food product revealed uniform distribution of fine cells of diameters ranging from 50 through 200$\mu$m contained in the foamed body.

(Example 6)

100g of chocolate (70% cacao) was melted at a temperature of 60°C, to which 75g of fresh cream (35% milk fat) and 75g of egg white warmed to a temperature of 50°C were added. The mixture was stirred sufficiently for 10 minutes to provide a homogeneous liquid which was loaded into a preparing container 1 of the structure shown in Fig. 1 having a volume of 700ml. Then, a foaming gas containing a gas mixture of nitrous oxide and nitrogen was loaded until an internal pressure of 0.9MPa with a nitrogen concentration of 3 vol.% was attained in the container 1. Then, the container 1 was shaken rigorously up and down for 15 seconds. Then, the container 1 was turned upside down, and the lever 3c was operated to open the nozzle 3a, allowing the creamy food product, which had absorbed the foaming gas (nitrous oxide plus air), to come out of the container. The creamy food product which came out of the nozzle 3a was warm chocolate mousse having a smooth texture with an overrun of about 200%.

An optical microscopic observation performed to see the state of cells in the obtained creamy food product revealed uniform distribution of fine cells of diameters ranging from 100 through 300$\mu$m. The obtained creamy food product was formed into a conical shape the height of which was compared with a height measurement made after lapse of an hour. The comparison revealed excellent shape retainability with a height decrease of about 10%.

(COMPARATIVE EXAMPLE 1)

The same procedure as used in Example 2 was followed to obtain a whip cream product, differing only in that the nitrous oxide gas mixture containing air at a concentration of 10 vol. % was replaced by nitrous oxide containing virtually no air. An optical microscopic observation performed to see the state of cells in the obtained whip cream product revealed numerous large cells of diameters ranging from 400$\mu$m through 2mm, with high inconsistency in the cell size. The obtained whip cream product had a coarse-looking surface, and began loosing its shape shortly.

(COMPARATIVE EXAMPLE 2)

The same procedure as used in Example 3 was followed to obtain a whip cream product, differing only in that the nitrous oxide gas mixture containing air at a concentration of 5 vol. % was replaced by nitrous oxide containing virtually no air. An optical microscopic observation performed to see the state of cells in the obtained whip cream product revealed numerous large cells of diameters ranging from 400$\mu$m through 2mm, with high inconsistency in the cell size. The obtained whip cream product had a coarse-looking surface, and began loosing its shape shortly.

(COMPARATIVE EXAMPLE 3)

The same procedure as used in Example 4 was followed to obtain a creamy food product, differing only in that the nitrous oxide gas mixture containing air at a concentration of 10 vol. % was replaced by nitrous oxide containing virtually no air. An optical microscopic observation performed to see the state of cells in the obtained creamy food product revealed numerous large cells of diameters ranging from 400 $\mu$m through 2 mm, with high inconsistency in the cell size. The obtained creamy food product had a coarse-looking surface, and began loosing its shape soon.

(COMPARATIVE EXAMPLE 4)

The same procedure as used in Example 5 was followed to obtain a creamy food product, differing only in that the nitrous oxide gas mixture containing air at a concentration of 5 vol. % was replaced by nitrous oxide containing virtually no nitrogen. An optical microscopic observation performed to see the state of cells in the obtained creamy food product revealed large cells of diameters ranging from 400μm through 2mm, with high inconsistency in the cell size. The obtained whip cream product had more or less the same overrun as in Example 5 of about 170%, but had a coarse-looking surface, and began loosing its shape soon.

(COMPARATIVE EXAMPLE 5)

The same procedure as used in Example 6 was followed to obtain a creamy food product, differing only in that the nitrous oxide gas mixture containing nitrogen at a concentration of 3 vol.% was replaced by nitrous oxide containing virtually no nitrogen. An optical microscopic observation performed to see the state of cells in the obtained creamy food product revealed large cells of diameters ranging from 500μm through 2mm, with high inconsistency in the cell size. The obtained whip cream product had a coarse-looking surface. Also, the obtained creamy food was formed into a conical shape the height of which was compared with a height measurement made after lapse of an hour. The comparison revealed a height decrease of about 30%.

**Claims**

1. A method for foaming a food, comprising steps of:

   charging a container, that contains a foaming-target food, with nitrous oxide and a less soluble gas having a smaller solubility in the food than the nitrous oxide, at a predetermined pressure;
   allowing the food to partially absorb nitrous oxide and the less soluble gas; and
   taking the food out of the container while releasing the pressure.

2. The method for foaming food according to Claim 1, wherein the less soluble gas comprises at least one selected from the group consisting of air, nitrogen and oxygen.

3. The method for foaming food according to Claim 1, wherein the less soluble gas has a concentration of 3 through 30 vol.% relative to a total amount of gas in the container.

4. The method for foaming food according to any one of Claims 1 through 3, wherein the predetermined pressure is 0.5 through 2 MPa.

5. A food container loaded with a foaming-target food, nitrous oxide and a less soluble gas having a smaller solubility in the food than the nitrous oxide,

   the nitrous oxide and the less soluble gas being partially absorbed by the food,
   the less soluble gas having a concentration of 3 through 30 vol.% relative to a total amount of gas in the container,
   the predetermined pressure being 0.5 through 2 MPa.

6. The food container according to Claim 5, wherein the less soluble gas comprises at least one selected from the group consisting of air, nitrogen and oxygen.

FIG.1

## INTERNATIONAL SEARCH REPORT

| | International application No. |
|---|---|
| | PCT/JP2008/060182 |

**A. CLASSIFICATION OF SUBJECT MATTER**
*A23P1/16*(2006.01)i, *A23L1/00*(2006.01)i, *A23L1/03*(2006.01)i

According to International Patent Classification (IPC) or to both national classification and IPC

**B. FIELDS SEARCHED**

Minimum documentation searched (classification system followed by classification symbols)
A23P1/16, A23L1/00, A23L1/03

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)
WPI, JSTPlus(JDreamII)

**C. DOCUMENTS CONSIDERED TO BE RELEVANT**

| Category* | Citation of document, with indication, where appropriate, of the relevant passages | Relevant to claim No. |
|---|---|---|
| Y | JP 49-113780 A  (S.C. Johnson & Son Inc.), 30 October, 1974 (30.10.74), Full text; all drawings & US 3970584 A          & GB 1457031 A & DE 2406109 A          & FR 2217405 A & NL 7401544 A          & AU 6441574 A & CA 1027868 A          & IT 1008800 B | 1-6 |
| Y | US 3849580 A  (American Home Products Corp.), 19 November, 1974 (19.11.74), Full text (Family: none) | 1-6 |
| Y | Hajime NAKAI, "Shinki Shitei Shokuhin Tenkabutsu 'Asanka Chisso ($N_2O$)' ni Tsuite", Foods & Food Ingredients Journal of Japan, 31 December, 2005 (31.12.05), Vol.210, No.5. 2005, 449-454 | 1-6 |

☒ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 September, 2008 (02.09.08) | 09 September, 2008 (09.09.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2008/060182 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | WO 2006/023564 A1 (KRAFT FOODS HOLDINGS, INC.), 02 March, 2006 (02.03.06), Full text & US 2006/0040034 A1 & EP 1793686 A & CA 2578366 A & NO 20071407 A & KR 10-2007-0065326 A & CN 101039591 A & JP 2008-510462 A | 2-6 |
| A | JP 3-61450 A (Osaka Gas Co., Ltd.), 18 March, 1991 (18.03.91), Full text; all drawings (Family: none) | 1-6 |
| A | JP 2006-345776 A (Sumitomo Seika Chemicals Co., Ltd.), 28 December, 2006 (28.12.06), Full text; all drawings (Family: none) | 1-6 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006345776 A